# EUROPÄISCHE PATENTSCHRIFT

(11) **EP 1 181 447 B1**
(45) Veröffentlichungstag und Bekanntmachung des Hinweises auf die Patenterteilung: **10.08.2005**
(21) Anmeldenummer: 00935019.0
(22) Anmeldetag: 15.05.2000
(51) Int. Cl.: F02N 11/04, F02N 15/04

(54) **ANTRIEBSSYSTEM FÜR EIN KRAFTFAHRZEUG**
DRIVE SYSTEM FOR A MOTOR VEHICLE
SYSTEME DE TRANSMISSION D'UN VEHICULE AUTOMOBILE

(30) Priorität: 21.05.1999 DE 19923316
(43) Veröffentlichungstag der Anmeldung: 27.02.2002
(73) Patentinhaber: ZF FRIEDRICHSHAFEN Aktiengesellschaft, 88038 Friedrichshafen (DE)
(72) Erfinder: ZIEMER, Peter, D-88069 Tettnang (DE)
(86) Internationale Anmeldenummer: PCT/EP2000/004346
(87) Internationale Veröffentlichungsnummer: WO 2000/071887

(56) Entgegenhaltungen:
- DE-A- 19 702 198
- DE-C- 4 112 215

## Beschreibung

Die Erfindung betrifft ein Antriebssystem für ein Kraftfahrzeug mit einer Starter- und Generator-Einheit nach der in Patentanspruch 1 näher definierten Art.

Nach herkömmlicher Weise werden Verbrennungsmotoren von Kraftfahrzeugen durch einen Starter, welcher ein Gleichstrommotor ist, auf solche Drehzahlen getrieben, daß sie aus eigener Kraft weiter laufen können, wobei das Starterdrehmoment über ein Ritzel auf ein Schwungrad des Motors übertragen wird. Diese aus der Praxis bekannten Starter sind so an einem Motorblock angeflanscht, daß bei einem Startvorgang das Ritzel in einen Zahnkranz auf der Schwungscheibe einspurt, um den Motor darüber in Drehung zu versetzen.

Der Verbrennungsmotor wird durch den Starter üblicherweise auf eine Drehzahl von ca. 300 1/min gebracht. Von dieser relativ geringen Drehzahl aus startet der Verbrennungsmotor und regelt sich in die Leerlaufdrehzahl, welche z. B. 700 1/min betragen kann, ein. Wenn der Verbrennungsmotor läuft, wird über einen separaten Generator Strom zur Aufladung der Fahrzeugbatterie erzeugt, wobei der Generator üblicherweise durch einen Keilriemen oder Zahnriemen angetrieben wird.

Bei derartigen getrennten Systemen zum Starten einer Verbrennungsmaschine und zur Stromerzeugung werden nachteilhafterweise zwei elektrische Maschinen eingesetzt, wobei der Vorteil einer elektrischen Maschine, sowohl als Motor als auch als Generator betrieben werden zu können, nicht genutzt wird.

Um die Stromversorgung eines Kraftfahrzeuges effizienter zu gestalten, werden zunehmend Entwicklungen betrieben, die zum Ziel haben, die Motorstart- und Generatorfunktion in ein Bauteil zusammenzufassen.

Eine derartige Lösung ist aus der Publikation "European Automotive Design", Ausgabe April 1998, Seite 24, bekannt. Hierbei wird ein Elektromotor direkt mit der Kurbelwelle des Verbrennungsmotors verbunden. Über den Elektromotor, welcher als Stellglied zwischen Verbrennungsmotor und Getriebe installiert ist, kann die Starterfunktion und die Generatorfunktion dargestellt werden, wobei sich die Auslegung des Elektromotors im wesentlichen nach der Startleistung richtet.

Zusammen mit einer Leistungselektronik und einem Startkondensator als Speichermedium ersetzt dieser bekannte Elektromotor einen herkömmlichen Starter, die Lichtmaschine und das Schwungrad des Kraftfahrzeuges und steuert als Generator die elektrische Energieversorgung.

In Zukunft werden vor allem im Hinblick auf einen Einsatz einer Start-Stop-Automatik, mittels der der Verbrennungsmotor bei Fahrzeugstillstand aus Gründen der Treibstoffeinsparung abgeschaltet wird, immer kürzere Startzeiten bei gleichzeitiger Geräuscharmut gefordert. Dies bedeutet eine Erhöhung der Starterleistung und eine Vergrößerung der Elektromotoren, welche dann jedoch für den Generatorbetrieb überdimensioniert sind. Zudem ist der Einsatz größerer Elektromotoren aufgrund des sehr begrenzten zur Verfügung stehenden Bauraumes problematisch.

Um einen kleineren Elektromotor als Starter einsetzen zu können, ist es möglich, zwischen dem Elektromotor und der Kurbelwelle ein Zwischengetriebe bzw. Startergetriebe zu installieren, um die notwendigen Momente an der Kurbelwelle während des Starts zur Verfügung zu stellen.

Nach erfolgtem Start ist jedoch eine Übersetzung im Generatorbetrieb unerwünscht, da der Generator mit Kurbelwellendrehzahl betrieben werden sollte, um entsprechenden Ladestrom abzugeben. Um dies zu ermöglichen, wurde ein Startergetriebe, welches ein Planetengetriebe mit Schaltvorgängen oder Freilaufschaltungen aufweist, erprobt, welches in einem Startbetrieb eine Übersetzung von i=3 bis i=4 und im Generatorbetrieb eine Übersetzung von i=1 ermöglicht.

Dieses in einem separaten Zwischengehäuse als selbständiges Bauteil zwischen dem Verbrennungsmotor und einem Drehmomentwandler des Fahrzeuggetriebes angeordnete Startergetriebe weist aber nachteilhafterweise eine Baugröße auf, welche den Vorteil des kleineren Elektromotors zum Teil wieder kompensiert.

Problematisch ist auch die aufwendige Konstruktion mit einer erheblichen Bauteilvielzahl, wobei die Entlüftung einer rotierenden Einheit und eine autarke Schmierung erforderlich ist. Zur Abdichtung des Zwischengehäuses werden zusätzliche dynamische Dichtungen benötigt, welche nachteilhafterweise ein erhöhtes Schleppmoment verursachen.

In der DE 41 12 215 C1 ist eine Vorrichtung zum Anlassen eines Verbrennungsmotors und zum Liefern elektrischer Energie während des Betriebs dieses Verbrennungsmotors bekanntgeworden, die als Starter-/Generator-Einheit mit einer zweiteilig aufgebauten Schwungscheibe zwischen der Kurbelwelle des Verbrennungsmotors und der Eingangswelle eines nachgeschalteten Schaltgetriebes angeordnet ist. Durch ein zwischen dem Rotor des elektrischen Starters/Generators und der Kurbelwelle angeordnetes Planetengetriebe ist im Starter-Betrieb eine Übersetzung größer 1 und im GeneratorBetrieb eine Übersetzung gleich 1 einstellbar.

Der vorliegenden Erfindung liegt die Aufgabe zugrunde, ein Antriebssystem für ein Kraftfahrzeug zu schaffen, bei dem die Vorteile einer elektrischen Maschine mit Starterfunktion und Generatorfunktion genützt werden, wobei deren Integration in den Antriebsstrang konstruktiv möglichst einfach bei kleinem Bauraumbedarf ausgeführt ist.

Erfindungsgemäß wird diese Aufgabe mit einem Antriebssystem gemäß den Merkmalen des Patentanspruches 1 und/oder des Patentanspruches 5 gelöst.

Mit dem erfindungsgemäßen Antriebssystem wird in jedem Fall der konstruktive Aufwand und die Anzahl der Bauteile reduziert, wobei in vorteilhafter Weise Bauraumbedarf und Gewicht eingespart werden und die Herstellungskosten gesenkt werden.

Neben einer vereinfachten Schmierung, Abdichtung und Entlüftung durch die Integration der Starter- und Generator-Einheit in ein Aggregat des Antriebsstranges, kann darüber hinaus der Wirkungsgrad durch Verzicht auf zusätzliche dynamische Dichtungen im Vergleich zur Ausführung als selbständiges Bauteil erhöht werden.

Weitere Vorteile und vorteilhafte Ausgestaltungen der Erfindung ergeben sich aus den weiteren Ansprüchen und den unter Bezugnahme auf die Zeichnung prinzipmäßig beschriebenen Ausführungsbeispielen.

Es zeigt:
- Fig.1: eine Prinzipdarstellung einer Starter- und Generator-Einheit eines Antriebssystems für ein Kraftfahrzeug, welche in einem Gehäuse eines Fahrzeuggetriebes integriert ist;
- Fig.2: eine Prinzipdarstellung einer Starter- und Generator-Einheit nach Fig. 1, welche in einer Wandlerglocke auf einer dem Fahrzeuggetriebe abgewandten Seite eines Drehmomentwandlers integriert ist;
- Fig.3: eine Starter- und Generator-Einheit gemäß Fig. 1, welche in einer Wandlerglocke zwischen einem Drehmomentwandler und einer Getriebepumpe des Fahrzeuggetriebes integriert ist;
- Fig.4: einen Planetenradsatz einer Starter- und Generator-Einheit mit Stufenplaneten, einem Sonnenrad und einem Hohlrad;
- Fig.5: einen Planetenradsatz einer Starter- und Generator-Einheit mit Stufenplaneten, einem Sonnenrad und zwei Hohlrädern;
- Fig.6: einen Planetenradsatz einer Starter- und Generator-Einheit mit Stufenplaneten, zwei Sonnenrädern und einem Hohlrad;
- Fig.7: einen Planetenradsatz einer Starter- und Generator-Einheit mit Stufenplaneten und zwei Hohlrädern;
- Fig.8: einen Planetenradsatz einer Starter- und Generator-Einheit mit Stufenplaneten und zwei Sonnenrädern;
- Fig.9: eine Starter- und Generator-Einheit, welche in einem Gehäuse eines Fahrzeuggetriebes mit Drehmomentwandler angeordnet ist, wobei der Planetenradsatz der Starter- und GeneratorEinheit mit vorhandenen Radsätzen ausgeführt ist;
- Fig.10: eine zu der Ausführung nach Fig. 9 alternative Ausführung einer mit vorhandenen Radsätzen ausgeführten Starter- und Generator-Einheit;
- Fig.11: einen Planetenradsatz einer Starter- und Generator-Einheit mit einer Freilaufkupplung zur Blockierung des Planetenradsatzes im Generatorbetrieb;
- Fig.12: einen Planetenradsatz einer Starter- und Generator-Einheit mit einer momentbetätigten Kupplung zur Blockierung des Planetenradsatzes im Generatorbetrieb;
- Fig.13: einen Planetenradsatz einer Starter- und Generator-Einheit mit einer angesteuerten, hydraulisch betätigten Kupplung zur Blockierung des Planetenradsatzes im Generatorbetrieb;
- Fig.14: einen Planetenradsatz einer Starter- und Generator-Einheit mit einer Klauenkupplung zur Blockierung des Planetenradsatzes im Generatorbetrieb;
- Fig.15: einen Planetenradsatz einer Starter- und Generator-Einheit, welche mit einer Ölpumpe des Fahrzeuggetriebes verbunden ist;
- Fig.16: eine weiteren Planetenradsatz einer Starterund Generator-Einheit, welcher mit einer Ölpumpe des Fahrzeuggetriebes verbunden ist;
- Fig.17: einen weiteren mit einer Ölpumpe des Fahrzeuggetriebes verbundenen Planetenradsatz einer Starter- und Generator-Einheit; und
- Fig.18: einen weiteren mit einer Ölpumpe des Fahrzeuggetriebes verbundenen Planetenradsatz einer Starter- und Generator-Einheit.

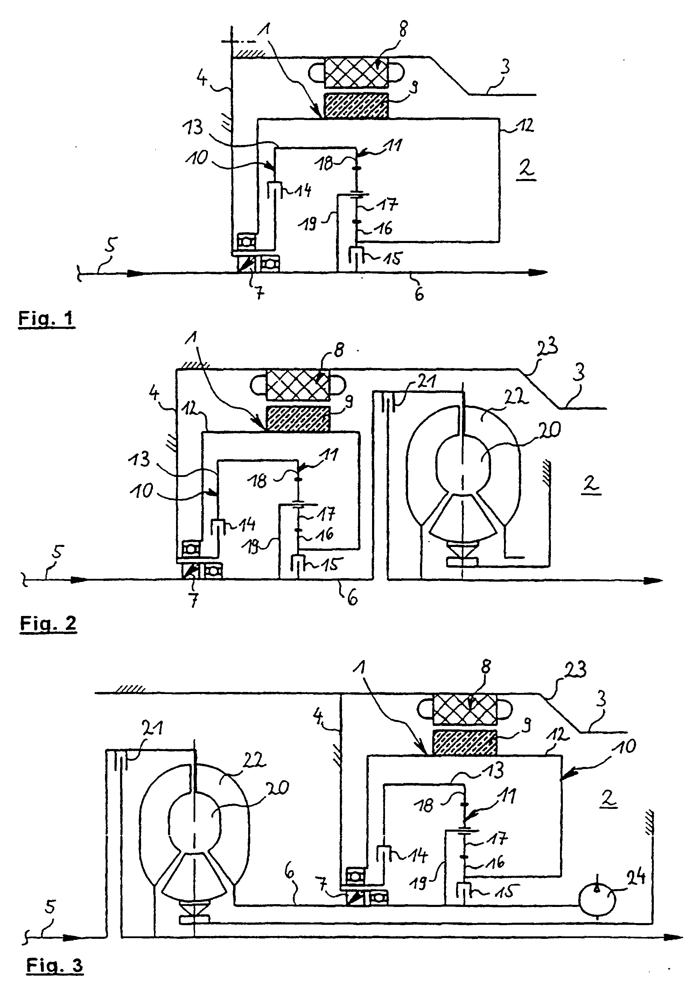

Bezug nehmend auf die Fig. 1 bis 18 ist jeweils eine Starter- und Generator-Einheit 1 dargestellt, welche in einem Aggregat 2 eines Antriebssystems für ein Kraftfahrzeug angeordnet ist. In den unterschiedlichen gezeigten Ausführungen ist das Aggregat, in dem die Starter- und Generator-Einheit 1 integriert ist, jeweils ein Fahrzeuggetriebe 2, wobei die Starter- und Generator-Einheit 1 in ein Gehäuse 3 des Fahrzeuggetriebes 2, welches durch einen daran angeschraubten Deckel 4 dichtend verschlossen ist, eingesetzt ist. Dabei befindet sich die Starter- und Generator-Einheit 1 jeweils in einem Bereich, in dem eine mit einer Kurbelwelle 5 drehfest verbundene Antriebswelle 6 durch den Deckel 4 tritt. Zur Motorseite hin ist der Durchtritt der Antriebswelle 6 durch den Deckel 4 über eine Dichteinrichtung 7 gegenüber der Umgebung des Gehäuses 3 abgedichtet.

In alternativen Ausführungen kann die Starter- und Generator-Einheit 1 selbstverständlich auch analog in einem Gehäuse eines Antriebsmotors oder eines Differentials angeordnet sein.

Nachfolgend werden unterschiedliche Ausführungen und Anordnungen der Starter- und Generator-Einheit 1 beschrieben, wobei zur Vereinfachung für funktionsgleiche Bauteile das selbe Bezugszeichen verwendet wird.

Die Starter- und Generator-Einheit 1 weist eine als elektrischer Motor mit Starterfunktion oder elektrischer Generator betreibbare elektrische Maschine 8 mit einem Rotor 9 auf. Zur Übertragung des Momentes der elektrischen Maschine 8 ist ein Planetengetriebe 10 mit einem Planetenradsatz 11 vorgesehen, wobei eine erste Welle 12 des Planetengetriebes 10 mit dem Rotor 9 der elektrischen Maschine 8 verbunden ist. Über wenigstens eine weitere Welle 13 und Schaltelemente, von denen ein Schaltelement 14 zu dem Getriebegehäuse 3 bzw. dessen Deckel 4 führt und ein weiteres Schaltelement 15 zu der Antriebswelle 6 führt, ist in einem Startbetrieb eine Übersetzung i einstellbar, welche größer als 1 ist, und in einem Fahrzustand bzw. Generatorbetrieb eine Übersetzung i=1 einstellbar, wobei der Planetenradsatz 11 geblockt ist.

Das Planetengetriebe 10 ist in dem geschlossenen Gehäuse 3 des Fahrzeuggetriebes 2 ohne eigene Dichtungen angeordnet, womit jeglicher Dichtungsaufwand für das Planetengetriebe 10 selbst entfällt. Durch die ohnehin vorhandene Dichtung 7 des Getriebegehäuses 3 ist jedoch gewährleistet, daß kein Schmutz in das Planetengetriebe 10 eindringt, weshalb auch der Bereich zwischen dem Rotor 9 und einer Statorfläche an der elektrischen Maschine 8 frei von Schmutz bleibt und ein schmutzbedingtes Auftreten von Schleppmomenten vermieden wird.

Insbesondere Bezug nehmend auf die Fig. 1 bis 3 ist eine einfache Ausführung des Planetengetriebes 10 mit dem Planetenradsatz 11 gezeigt, welcher jeweils ein Sonnenrad 16, vorliegend drei Planetenräder 17 und ein Hohlrad 18 umfaßt, wobei die Planetenräder 17 auf einem Planetenträger 19 sitzen, welcher als Steg der Antriebswelle 6 ausgeführt ist. Das Sonnenrad 16 ist jeweils mit der ersten Welle 12, auf der der Rotor 9 der elektrischen Maschine 8 angebracht ist, drehfest verbunden. Das Hohlrad 18 ist über die weitere Welle 13 und das Schaltelement 14, welches eine Kupplung darstellt, mit dem Gehäuse 3 bzw. seinem Deckel 4 zur Einstellung einer Starterübersetzung, welche größer 1 ist, verbindbar. Bei einem Startvorgang rotiert zunächst die mit dem Sonnenrad 16 und dem Rotor 9 verbundene Welle 12, während das Planetengetriebe 10 über das Hohlrad 18, die Welle 13 und die geschlossene Kupplung 14 abgestützt wird. Über den durch das Planetenrad 17 angetriebenen Planetenträger 19 wird das Startmoment auf die Antriebswelle 6 übertragen. Bei einem Generatorbetrieb, d. h. im Fahrzustand, ist hingegen die das Hohlrad 18 mit dem Deckel 4 verbindende Kupplung 14 geöffnet, und die weitere Kupplung 15, welche das Sonnenrad 16 mit der Antriebswelle 6 verbindet, ist geschlossen. Dabei wird das Generatormoment von der Antriebswelle 6 über das Schaltelement 15 auf den auf der Welle 12 befindlichen Rotor 9 übertragen.

In Fig. 2 ist ersichtlich, daß das Fahrzeuggetriebe 2 einen hydraulischen Drehmomentwandler 20 mit einer Wandlerkupplung 21 aufweist, wobei die Antriebswelle 6 und eine Pumpenschale 22 des Drehmomentwandlers 20 mit der Kurbelwelle 5 drehfest verbunden ist.

Während in Fig. 2 die Starter- und Generator-Einheit 1 auf der dem Fahrzeuggetriebe 2 abgewandten Seite des Drehmomentwandlers 20 in einer Wandlerglocke 23 des Gehäuses 3 angeordnet ist, ist die Starter- und Generator-Einheit 1 in der Ausführung nach Fig. 3 auf der dem Fahrzeuggetriebe 2 zugewandten Seite des Drehmomentwandlers 20 angeordnet.

Die Anordnung der Starter- und Generator-Einheit 1 zwischen dem Drehmomentwandler 20 und dem Fahrzeuggetriebe 2 bzw. einer Ölpumpe 24 des Fahrzeuggetriebes 2 ist vor allem im Hinblick auf die Montage vorteilhaft, da der Drehmomentwandler 20 als Zulieferteil nach Montage der Starter- und Generator-Einheit 1 einfach aufgeschoben werden kann.

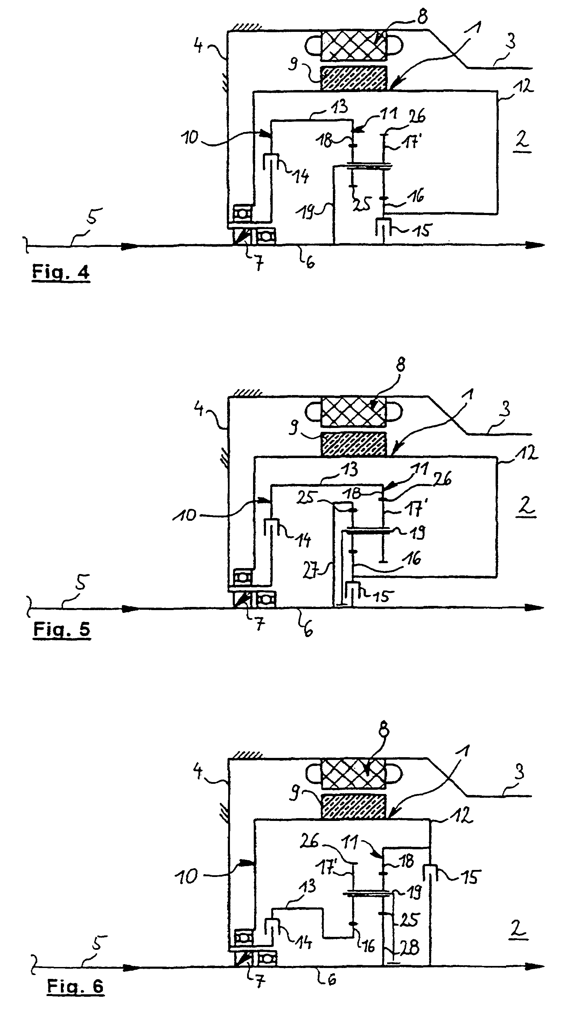

Die Fig. 4 bis 8 zeigen jeweils eine Ausführung des Planetengetriebes 10 und des Planetenradsatzes 11 mit als Stufenplaneten ausgebildeten Planetenrädern 17', mit denen in vorteilhafter Weise höhere Übersetzungen, beispielsweise i größer 3, im Vergleich zum ungestuften Planeten bei kleinerem oder gleichem Hohlraddurchmesser möglich sind. Die Stufenplaneten 17' sind dabei mit einem kleinen Stufenrad 25 und einem großen Stufenrad 26 ausgebildet.

In Fig. 4 ist eine Ausführung des Planetenradsatzes 11 mit dem Sonnenrad 16 und dem Hohlrad 18 gemäß den Ausführungen nach den Fig. 1 bis 3 dargestellt, wobei das Sonnenrad 16 an dem großen Stufenrad 26 und das Hohlrad 18 an dem kleinen Stufenrad 25 des Stufenplaneten 17' eingreifen.

In einem Startbetrieb wird das Hohlrad 18 festgesetzt. Das Moment der elektrischen Maschine 8 wird über das Sonnenrad 16 eingeleitet und über den Planetenträger bzw. Steg 19 auf die mit der Kurbelwelle 5 drehfest verbundene Antriebswelle 6 übertragen. Das Schaltelement 15 ist hierbei offen.

Im Fahrzustand bzw. Generatorbetrieb läuft der Planetenradsatz 11 durch Öffnen des Schaltelementes 14 zwischen Hohlrad 18 und Deckel 4 und gleichzeitigem Schließen des Schaltelementes 15 zwischen Sonnenrad 16 und der Antriebswelle 6 im geblockten Zustand um. Das Generatormoment wird von der Antriebswelle 6 über das geschlossene Schaltelement 15 über die Welle 12 auf den Rotor 9 übertragen.

In Fig. 5 ist ein abweichender Planetenradsatz 11 mit einem Stufenplaneten 17' gemäß Fig. 4, einem Sonnenrad 16, einem ersten, großen Hohlrad 18, welches über die Kupplung 14 mit dem Deckel 4 verbindbar ist, und mit einem zweiten, kleinen Hohlrad 27 dargestellt.

Durch die Ausbildung des Planetenradsatzes 15 mit dem kleinen Hohlrad 27, welches fest mit der Antriebswelle 6 verbunden ist, können noch höhere Übersetzungen, nämlich vorzugsweise i größer 6, als mit der in der Fig. 4 gezeigten Lösung erreicht werden, wobei das große Hohlrad 18 im Vergleich zu Fig. 4 kleiner bzw. gleich groß dimensioniert werden kann.

Bei der Variante nach Fig. 5 wird das große Hohlrad 18 im Startbetrieb festgesetzt und das Moment der elektrischen Maschine 8 über das Sonnenrad 16 in den Stufenplaneten 17' eingeleitet, von dem es über das kleine Hohlrad 27 auf die Antriebswelle 6 übertragen wird. Die Momentenübertragung im Fahrzustand, d. h. bei Generatorbetrieb, verläuft wie zu Fig. 4 beschrieben.

In Fig. 6 ist ein weiterer Planetenradsatz 11 mit Stufenplaneten 17', einem Hohlrad 18, einem ersten, kleinen Sonnenrad 16 und einem zweiten, großen Sonnenrad 28 dargestellt, wobei das Hohlrad 18 mit der mit der elektrischen Maschine 8 verbundenen Welle 12 und der zu der Antriebswelle 6 führenden Kupplung 15 verbunden ist und das kleine Sonnenrad 16 mit der zu dem Schaltelement 14 und dem Dekkel 4 führenden Welle 13 verbunden ist. Das große Sonnenrad 28 ist mit der Antriebswelle 6 drehfest verbunden.

Bei dieser Lösung, welche ebenfalls hohe Übersetzungen bei kleinen Hohlraddurchmessern erlaubt, wird das Sonnenrad 16 im Startbetrieb festgesetzt, wobei das Moment der elektrischen Maschine 8 über das Hohlrad 18 eingeleitet und über das große Sonnenrad 28 auf die Antriebswelle 6 übertragen wird. Der Generatorbetrieb im Fahrzustand läuft wiederum analog zu dem zu Fig. 4 beschriebenen Generatorbetrieb.

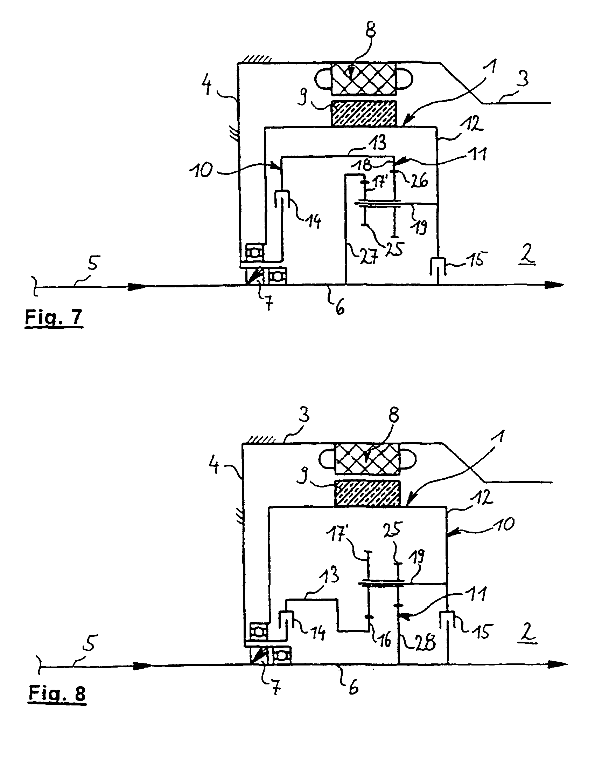

Fig. 7 zeigt eine Ausführung des Planetenradersatzes 11 mit einem Stufenplaneten 17',einem ersten, großen Hohlrad 18 und zweiten, kleinen Hohlrad 27 wie bei der Ausführung nach Fig. 5, wobei hier jedoch auf ein Sonnenrad verzichtet wird. Statt dessen ist die den Rotor 9 der elektrischen Maschine 8 tragende Welle 12 mit dem Planetenträger 19 einstückig ausgebildet und über das Schaltelement 15 mit der Antriebswelle 6 verbindbar.

Da bei dieser Lösung auf ein Sonnenrad verzichtet wird, ist diese Ausführung vorteilhafterweise sehr kostengünstig.

Betrachtet man den Momentenverlauf im Startbetrieb, so wird das große Hohlrad 18 festgesetzt und das Moment der elektrischen Maschine 8 über die Welle 12 in die Stufenplaneten 17' eingeleitet, und von dort über das kleine Hohlrad 27 auf die Antriebswelle 6 übertragen.

Im Fahrzustand bzw. Generatorbetrieb läuft der Planetenradsatz 11 wieder in geblocktem Zustand um, wie zu Fig. 4 beschrieben.

Schließlich zeigt die Fig. 8 noch eine weitere Ausführung eines Planetenradsatzes 11 mit Stufenplaneten 17', kleinem Sonnenrad 16 und großem Sonnenrad 28 wie in Fig. 6, wobei hier auf ein Hohlrad verzichtet wird, was ebenfalls in vorteilhafter Weise zur Kostenreduzierung beiträgt.

Im Startbetrieb wird das Sonnenrad 16, welches mit der zu dem Gehäuse 3 bzw. Deckel 4 führenden Kupplung 14 verbunden ist, festgesetzt, wobei das Moment der elektrischen Maschine über die auch hier einstückig mit dem Planetenträger 19 ausgebildete, den Rotor 9 tragende Welle 12 in die Stufenplaneten 17' eingeleitet wird. Von diesen wird das Moment über das große Sonnenrad 28 auf die Antriebswelle 6 übertragen.

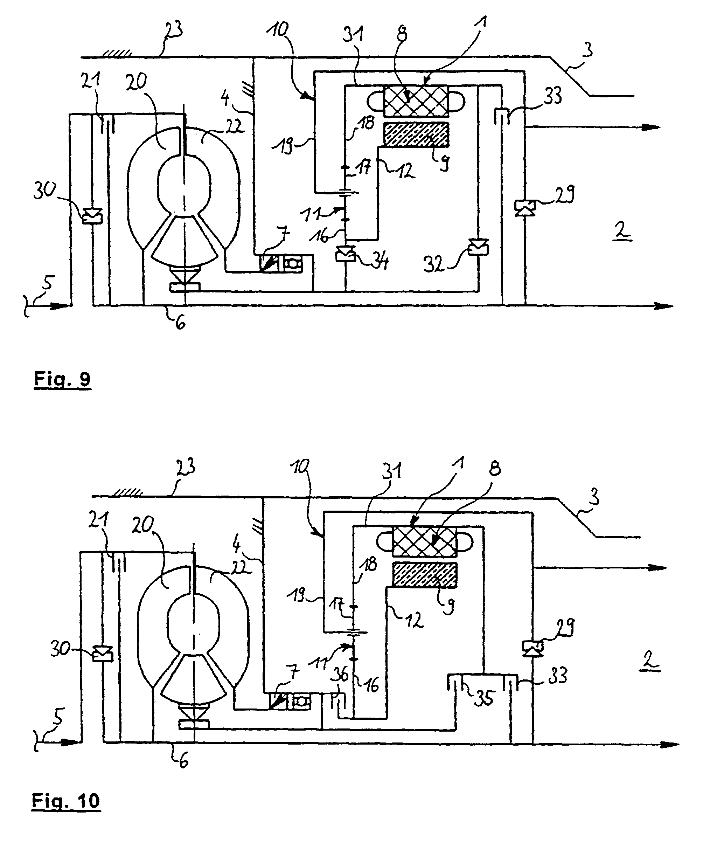

Die Fig. 9 und 10 zeigen jeweils eine Starter- und Generator-Einheit 1 in einem Getriebe 2 mit einem Drehmomentwandler 20, wobei das Planetengetriebe 10 der Starter- und Generator-Einheit 1 zur Ausbildung seines Planetenradsatzes 11 bereits vorhandene Getriebeteile im Startbetrieb nutzt. Auf diese Weise kann ein zusätzlicher Radsatz eingespart werden.

Bei der Ausführung nach Fig. 9 wird ein üblicher Planetenradsatz 11 des Getriebes 2 im Startbetrieb für die Starter- und Generator-Einheit 1 verwendet.

In einem Startbetrieb wir das Moment der elektrischen Maschine 8 über die Welle 12 des Rotors 9, die Planetenräder 17, den mit der Antriebswelle 6 über einen Freilauf 29 verbundenen Planetenträger 19 und einen Freilauf 29 auf die Antriebswelle 6, welche mit der Kurbelwelle 5 über einen Freilauf 30 verbunden ist, übertragen. Dabei ist das Hohlrad 18 über eine die elektrische Maschine 8 tragende Welle 31 und einen Freilauf 32 an dem Gehäuse 3 des Getriebes 2 abgestützt. Der Freilauf 34 befindet sich im Überholzustand und überträgt somit kein Moment, während das Schaltelement 33 geöffnet ist.

Im Fahrbetrieb wird das Generatorenmoment von der Antriebswelle 6 über das nun geschlossene Schaltelement 33 und über die Welle 31 auf die elektrische Maschine 8 übertragen. Das Sonnenrad 16 und der Rotor 9 werden über die Welle 12 und den nun im Haltezustand befindlichen Freilauf 34 an dem Deckel 4 bzw. an dem Gehäuse 3 abgestützt. Die Freiläufe 29 und 32 befinden sich im Überholzustand. Über das mit der Welle 31 verbundene Hohlrad 18 wird das Motormoment in den Planetenradsatz eingeleitet und über den Steg 19 in das Fahrzeuggetriebe 2 mit einer Übersetzung ins Langsame weitergeleitet.

Die Funktionsweise der in der Fig. 10 gezeigten Ausführung ist analog. Anstelle der nur einseitig wirksamen Freiläufe 32 und 34 werden hier jedoch Kupplungen 35 und 36 eingesetzt.

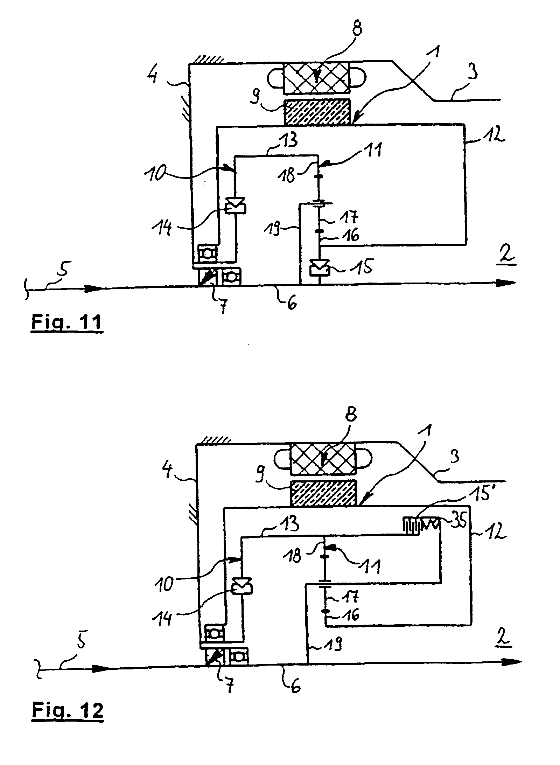

Die Fig. 11 bis 14 zeigen unterschiedliche Ausführungen von Kupplungen, mit denen der Planetenradsatz 11 im Fahrzustand geblockt werden kann, wobei Sonnenrad 16, Hohlrad 18 und Planetenträger 19 im geblockten Zustand die gleiche Drehzahl aufweisen.

In Fig. 11 ist ersichtlich, daß die zu den Fig. 1 bis 3 beschriebene Kupplung 15, mittels der der Planetenradsatz 11 im Fahrbetrieb blockiert und eine Übersetzung i=1 eingestellt werden kann, als eine Freilaufkupplung ausgeführt ist. Der Einsatz der Freilaufkupplung 15 hat dabei den Vorteil, daß keine Schaltelementansteuerung erforderlich ist.

Während des Startvorganges befindet sich die Freilaufkupplung 15 im Überholzustand, d. h. daß kein Moment über die Freilaufkupplung 15 übertragen wird, und die das Hohlrad 18 mit dem Gehäuse 3 bzw. Deckel 4 verbindende, ebenfalls als Freilaufkupplung ausgebildete Kupplung 14 ist im Sperrzustand. Im Fahr- bzw. Generatorbetrieb schaltet die zu der Antriebswelle 6 führende Freilaufkupplung 15 in den Sperrzustand und die zu dem Gehäuse 3 führende Freilaufkupplung 14 in den Überholzustand.

In Fig. 12 ist das Schaltelement, mittels dem der Planetenradsatz 11 im Generatorbetrieb blockiert werden kann, als eine momentbetätigte Kupplung 15' ausgeführt, welche ebenfalls keiner Schaltelementansteuerung bedarf.

Das Hohlrad 18 wird während des Startvorganges z. B. von der zu dem Gehäuse 3 führenden Freilaufkupplung 14 oder alternativ von einem Magnetschalter in einer Rastierung (nicht dargestellt) festgehalten. Zwischen dem Hohlrad 18 und dem mit der Antriebswelle 6 bzw. Kurbelwelle 5 verbundenen Planetenträger 19 befindet sich die durch eine Feder 35 vorgespannte, durch ein Reibmoment betätigbare und als Lamellenkupplung ausgeführte Kupplung 15'. Die Vorspannung durch die Feder 35 ist so ausgelegt, daß die Kupplung 15' beim Übertragen des Generatormomentes nicht durchrutscht. Während des Startvorganges muß die elektrische Maschine 8, 9 zusätzlich das Lamellenrutschmoment überwinden.

In der Kupplung 15' ist eine nicht näher dargestellte, als Kugel-Rampe-System ausgebildete Selbstverstärkung eingebaut, so daß die Kupplung 15' während des Startvorganges weniger vorgespannt ist als während des Generatorbetriebes. Wenn der Startvorgang abgeschlossen ist, gibt die Freilaufkupplung 14 das Hohlrad 18 frei. Die momentbetätigte Kupplung 15' sorgt dann für eine Drehzahlangleichung zwischen Hohlrad 18 und Steg bzw. Planetenträger 19. Wenn die Differenzdrehzahl abgebaut ist, dreht der gesamte Planetenradsatz 11 im Block mit Übersetzung i=1 und bleibt bis zum Abstellen des Motors bzw. bis zum Neustart des Motors geschaltet.

Die Ausführung nach Fig. 12 hat den Vorteil, daß ungeachtet äußerer Bedingungen, wie z. B. Schwingungen aus der Kurbelwelle 5, in einen Startbetrieb und einen Generatorbetrieb unterschieden wird, wobei während des Generatorbetriebes eine feste Übersetzung i=1 gewährleistet ist.

Zudem ist mit dieser Ausgestaltung eine Überlastsicherung beim Abstellen des Motors gegeben, da die Kupplung hier durchrutschen kann.

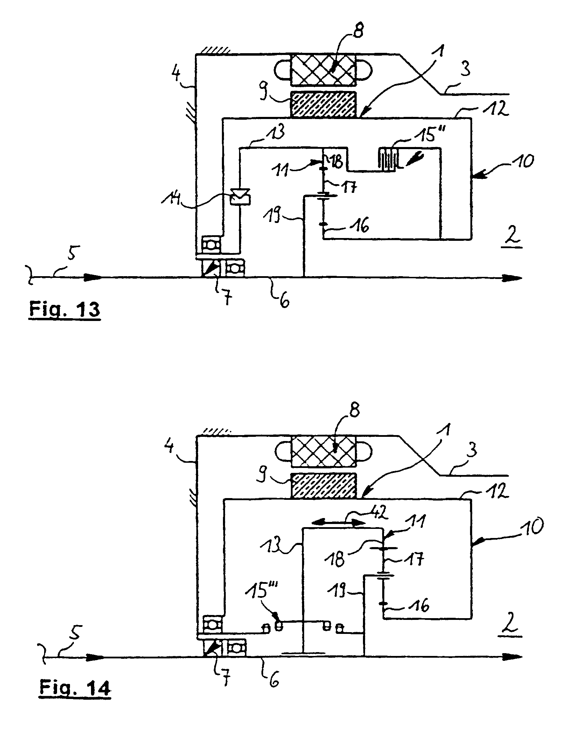

Fig. 13 zeigt eine angesteuerte Kupplung 15'' zur Blockierung des Planetenradsatzes 11 im Fahrbetrieb.

Nach dem Startvorgang wird die hydraulisch betätigte Kupplung 15'' aktiv geschlossen, wobei die Ansteuerung in der vorliegenden Ausführung durch Anzapfen des sich erst im Fahrzustand aufbauenden Hauptdruckes an der Ölpumpe 24 des Fahrzeuggetriebes 2 erfolgt.

Vorteilhafterweise ist mit der Variante nach Fig. 13 ein Generator- und Motorbetrieb im Fahrzustand mit 1:1-Übersetzung möglich, wobei die Ansteuerung der Kupplung 15'' ohne zusätzliches Stellglied durchgeführt wird.

Wie Fig. 14 zeigt, kann die Blockierung des Planetenradsatzes 11 auch durch eine Klauenkupplung 15''' erfolgen, welche einen sehr geringen Bauaufwand erfordert.

Die Klauenkupplung 15''' ermöglicht ebenfalls eine 1:1-Ubersetzung im Generatorbetrieb, indem sie das mit der axial verschiebbaren Welle 13 verbundene Hohlrad 18 und den Planetenträger 19 über eine im Planetengetriebe 10 durch Schrägverzahnung erzeugte Axialkraft und Axialbewegung (Pfeil 42) verbindet. Im Startbetrieb wird durch Umkehr der Momentenrichtung und der damit verbundenen Richtungsumkehr der Axialkraft das Hohlrad 18 über die Klauenkupplung 15''' mit dem Gehäuse 3 bzw. dessen Deckel 4 verbunden.

Der für die Klauenkupplung 15''' erforderliche Synchronlauf wird dabei durch die elektrische Maschine 8 erzeugt.

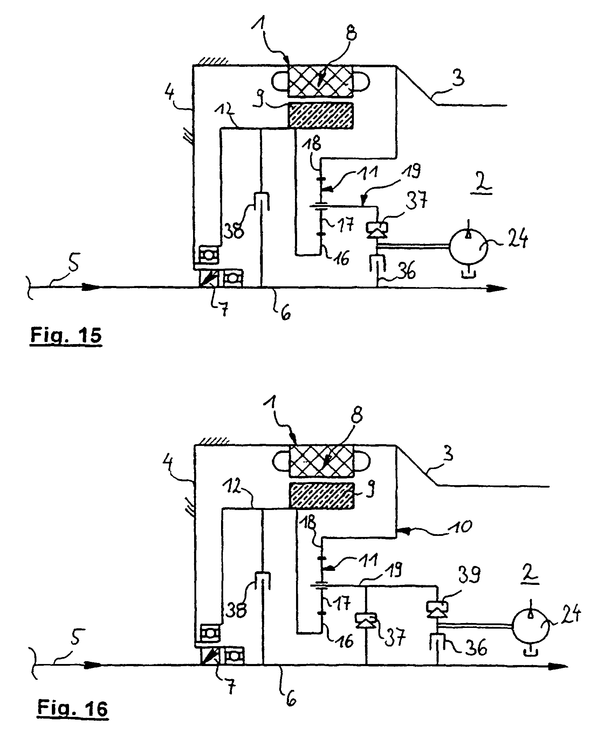

Die Fig. 15 bis 18 zeigen Beispiele einer Verwendung des Planetengetriebes 10 im Fahrzustand für den Antrieb der Ölpumpe 24 des Fahrzeuggetriebes 2 mit reduziertem Förderdrehzahlbereich.

Durch die in den Fig. 15 bis 18 gezeigten Lösungen, bei denen die Ölpumpe 24 jeweils über eine Fliehkraftkupplung 36 mit der Antriebswelle 6 verbindbar ist, ergibt sich der Vorteil, daß die Ölpumpe 24 kleiner dimensioniert werden kann.

Bei den Varianten nach Fig. 15 und Fig. 16 sitzt das Hohlrad 18 des Planetenradsatzes 11 jeweils fest. Im Startbetrieb wird das Moment über das Sonnenrad 16 eingeleitet und über den Planetenträger 19 und eine Freilaufkupplung 37 auf die Kurbelwelle 5 bzw. die mit ihr drehfest verbundene Antriebswelle 6 gebracht. Im Generatorbetrieb wird eine Kupplung 38 geschlossen, und die Freilaufkupplung 37 geht in den Überholbetrieb.

Bei der in der Fig. 15 gezeigten Variante sind die Ölpumpe 24 und die Fliehkraftkupplung 36 zwischen die Freilaufkupplung 37 und die Antriebswelle 6 geschaltet.

Die Fliehkraftkupplung 36 öffnet bei einer definierter Drehzahl des Verbrennungsmotors bzw. der Antriebswelle 6, wobei die Ölpumpe vor dem Öffnen der Fliehkraftkupplung 36 mit Kurbelwellendrehzahl und anschließend mit Planetenträgerdrehzahl, welche allerdings geringer ist, läuft.

Gemäß Fig. 16 ist die Ölpumpe 24 zwischen der Freilaufkupplung 39, welche hier parallel zur Freilaufkupplung 37 angeordnet ist, und der Fliehkraftkupplung 36 plaziert.

Durch diese Parallelanordnung kann die Fliehkraftkupplung 36 bezüglich des zu übertragenden Momentes auf das Pumpenaufnahmemoment ausgelegt werden, d. h. wie es für den Antrieb der Ölpumpe 24 erforderlich ist, da das Startmoment anders als bei der Ausführung nach Fig. 15 hier über die Freilaufkupplung 37 übertragen werden kann.

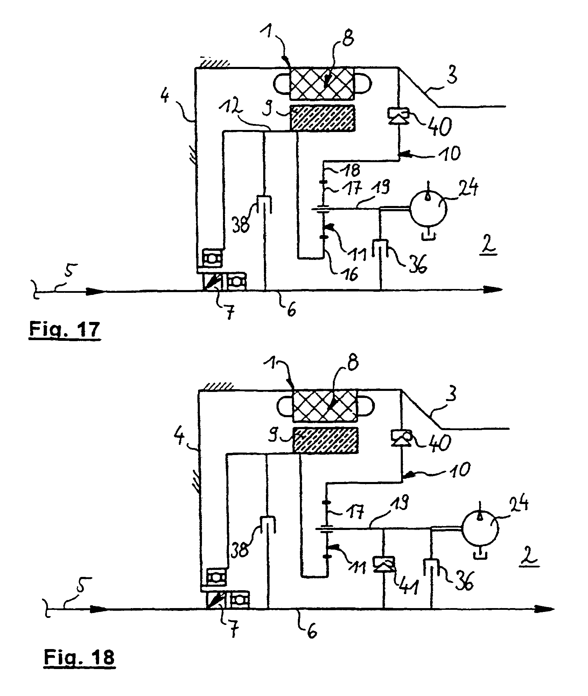

Die Ausführung nach Fig. 17 entspricht weitgehend der Lösung nach Fig. 15, wobei jedoch anstelle der Freilaufkupplung 37 eine Freilaufkupplung 40 zwischen Hohlrad 18 und Gehäuse 3 angeordnet ist.

Im Startbetrieb wird das Hohlrad 18 des Planetenradsatzes 11 über die Freilaufkupplung 40 an dem Gehäuse 3 abgestützt, und das Moment der elektrischen Maschine 8 wird über das Sonnenrad 16 auf den Planetenträger 19 und über die Fliehkraftkupplung 36 auf die Antriebswelle 6 geleitet.

Im Generatorbetrieb wird die Kupplung 38 geschlossen, und die Freilaufkupplung 40 geht in den Überholbetrieb. Die Zustände an der Ölpumpe 24 entsprechen denen wie in Fig. 15 beschrieben.

Fig. 18 zeigt eine zu der in Fig. 16 dargestellten Parallellösung alternative Ausführung, wobei eine Freilaufkupplung 41 parallel zu der Fliehkraftkupplung 36 angeordnet ist.

### Bezugszeichen

- 1: Starter- und Generator-Einheit
- 2: Aggregat, Fahrzeuggetriebe
- 3: Gehäuse
- 4: Deckel des Gehäuses
- 5: Kurbelwelle
- 6: Antriebswelle
- 7: Dichtung
- 8: elektrische Maschine
- 9: Rotor
- 10: Planetengetriebe
- 11: Planetenradsatz
- 12: Welle
- 13: Welle
- 14: Schaltelement, Kupplung, Freilaufkupplung
- 15: Schaltelement, Kupplung, Freilaufkupplung
- 15': Schaltelement, momentbetätigte Kupplung
- 15'': Schaltelement, angesteuerte Kupplung
- 15''': Schaltelement, Klauenkupplung
- 16: Sonnenrad, kleines Sonnenrad
- 17: Planetenrad
- 17': Stufenplanet
- 18: Hohlrad, großes Hohlrad
- 19: Planetenträger, Steg
- 20: Drehmomentwandler
- 21: Wandlerkupplung
- 22: Pumpenschale des Drehmomentwandlers
- 23: Wandlerglocke
- 24: Ölpumpe des Fahrzeuggetriebes
- 25: Kleines Stufenrad
- 26: Großes Stufenrad
- 27: Zweites, kleines Hohlrad
- 28: Zweites, großes Sonnenrad
- 29: Freilaufkupplung
- 30: Freilaufkupplung
- 31: Welle
- 32: Freilaufkupplung
- 33: Kupplung
- 34: Freilaufkupplung
- 35: Feder
- 36: Fliehkraftkupplung
- 37: Freilaufkupplung
- 38: Kupplung
- 39: Freilaufkupplung
- 40: Freilaufkupplung
- 41: Freilaufkupplung

## Patentansprüche

1. Antriebssystem für ein Kraftfahrzeug mit einer in einem Antriebsstrang mit einer Antriebswelle (6) angeordneten Starter- und Generator-Einheit (1), welche eine als elektrischer Motor mit Starterfunktion oder elektrischer Generator betreibbare elektrische Maschine (8, 9) und ein Planetengetriebe (10) mit wenigstens einem Sonnenrad (16, 28), wenigstens einem Planetenrad (17, 17') und wenigstens einem Hohlrad (18, 27) aufweist, wobei das Planetengetriebe (10) über Wellen (12, 13, 31) und Schaltelemente (14, 15, 15', 15'', 15''', 29, 30, 32, 34, 36 bis 41) mit der elektrischen Maschine (8, 9), mit der Antriebswelle (6) und mit einem Gehäuse (3, 4) eines in dem Antriebsstrang angeordneten Aggregates (2) derart verbindbar ist, daß in einem Startbetrieb eine Übersetzung i größer 1 und in einem Generatorbetrieb eine Übersetzung i gleich 1 einstellbar ist, und wobei die Starter- und Generator-Einheit (1) in dem Gehäuse (3, 4) in einem Bereich, in dem die Antriebswelle (6) oder eine mit dieser drehfest verbundene Welle (5) durch das Gehäuse (3, 4) tritt, gegenüber einem das Gehäuse (3, 4) umgebenden Bereich abgedichtet angeordnet ist, **dadurch gekennzeichnet, daß** das Aggregat, in dem die Starter- und Generator-Einheit (1) angeordnet ist, ein Fahrzeuggetriebe (2) und dessen Gehäuse ein von einem Deckel (4) geschlossenes Getriebegehäuse (3) darstellt, wobei die Starter- und Generator-Einheit (1) mit dem Deckel (4), durch den die Antriebswelle (6) oder eine mit dieser drehfest verbundene Welle (5) tritt, zu einer Motorseite hin dichtend abgeschlossen ist.

2. Antriebssystem nach Anspruch 1, **dadurch gekennzeichnet, daß** das Fahrzeuggetriebe (2) einen hydrodynamischen Drehmomentwandler (20) aufweist, zu dessen Aufnahme das Getriebegehäuse (3) mit einer Wandlerglocke (23) ausgebildet ist, wobei die Starter- und Generator-Einheit (1) auf einer dem Fahrzeuggetriebe (2) abgewandten Seite des Drehmomentwandlers (20) in der Wandlerglocke (23) angeordnet ist.

3. Antriebssystem nach Anspruch 1, **dadurch gekennzeichnet, daß** das Fahrzeuggetriebe (2) einen hydrodynamischen Drehmomentwandler (20) aufweist, zu dessen Aufnahme das Getriebegehäuse (3) mit einer Wandlerglocke (23) ausgebildet ist, wobei die Starter- und Generator-Einheit (1) auf einer dem Fahrzeuggetriebe (2) zugewandten Seite des Drehmomentwandlers (20) zwischen diesem und einer Ölpumpe (24) des Fahrzeuggetriebes (2) angeordnet ist.

4. Antriebssystem nach Anspruch 3, **dadurch gekennzeichnet, daß** die Antriebswelle (6) über eine Pumpenschale (22) des Drehmomentwandlers (20) drehfest mit einer Kurbelwelle (5) verbunden ist.

5. Antriebssystem für ein Kraftfahrzeug mit einer in einem Antriebsstrang angeordneten Starter- und Generator-Einheit (1), nach einem der vorhergehenden Ansprüche, welche eine elektrische Maschine (8, 9) und ein Planetengetriebe (10) mit einem wenigstens ein Planetenrad (17') umfassenden Planetenradsatz (11) aufweist, **dadurch gekennzeichnet, daß** das wenigstens eine Planetenrad (17') als Stufenplanet mit einem kleinen Stufenplaneten (25) und einem großen Stufenplaneten (26) ausgebildet ist.

6. Antriebssystem nach Anspruch 1 und 5, **dadurch gekennzeichnet, daß** der Planetenradsatz (11) wenigstens einen Stufenplaneten (17'), ein Sonnenrad (16) und ein Hohlrad (18) aufweist, wobei im Startbetrieb das Hohlrad (18) festgesetzt und das Moment der elektrischen Maschine (8, 9) über das Sonnenrad (16) und einen Planetenträger (19) auf die Antriebswelle (6) oder eine mit ihr drehfest verbundene Welle (5) geführt wird, und wobei im Generatorbetrieb der Planetenradsatz (11) bei einem geöffneten Schaltelement (14) zwischen dem Hohlrad (18) und dem Gehäuse (3) und bei wenigstens einem geschlossenen Schaltelement (15) zwischen dem Sonnenrad (16) und der Antriebswelle (6) in geblocktem Zustand umläuft.

7. Antriebssystem nach Anspruch 1 und 5, **dadurch gekennzeichnet, daß** der Planetenradsatz (11) wenigstens einen Stufenplaneten (17'), ein Sonnenrad (16) und zwei Hohlräder (18, 27) aufweist, wobei im Startbetrieb ein erstes, über ein Schaltelement (14) mit dem Gehäuse (3) verbindbares Hohlrad (18) festgesetzt ist und das Moment der elektrischen Maschine (8, 9) über das Sonnenrad (16) und ein zweites Hohlrad (27) auf die Antriebswelle (6) übertragen wird, und wobei der Planetenradsatz (11) im Generatorbetrieb bei einem geöffneten Schaltelement (14) und bei wenigstens einem geschlossenen, zu der Antriebswelle (6) führenden Schaltelement (15) in geblocktem Zustand umläuft.

8. Antriebssystem nach Anspruch 1 und 5, **dadurch gekennzeichnet, daß** der Planetenradsatz (11) wenigstens einen Stufenplaneten (17'), ein Hohlrad (18) und zwei Sonnenräder (16, 28) aufweist, wobei im Startbetrieb ein erstes Sonnenrad (16) festgesetzt ist und das Moment der elektrischen Maschine (8, 9) über das Hohlrad (18) und das zweite Sonnenrad (28) auf die Antriebswelle (6) übertragen wird, und wobei der Planetenradsatz (11) im Generatorbetrieb bei einem geöffneten Schaltelement (14) und bei wenigstens einem geschlossenen, zu der Antriebswelle (6) führenden Schaltelement (15) in geblocktem Zustand umläuft.

9. Antriebssystem nach Anspruch 1 und 5, **dadurch gekennzeichnet, daß** der Planetenradsatz (11) wenigstens einen Stufenplaneten (17') und zwei Hohlräder (18, 27) aufweist, wobei im Startbetrieb ein erstes Hohlrad (18) festgesetzt ist und das Moment der elektrischen Maschine (8, 9) über den Planetenträger (19) eingeleitet und über das zweite Hohlrad (27) auf die Antriebswelle (6) übertragen wird, und wobei der Planetenradsatz (11) im Generatorbetrieb bei einem geöffneten Schaltelement (14) und bei wenigstens einem geschlossenen, zu der Antriebswelle (6) führenden Schaltelement (15) in geblocktem Zustand umläuft.

10. Antriebssystem nach Anspruch 1 und 5, **dadurch gekennzeichnet, daß** der Planetenradsatz (11) wenigstens einen Stufenplaneten (17') und zwei Sonnenräder (16, 28) umfaßt, wobei im Startbetrieb ein erstes Sonnenrad (16) festgesetzt ist und das Moment der elektrischen Maschine (8, 9) über den Planetenträger (19) eingeleitet und über das zweite Sonnenrad (28) auf die Antriebswelle (6) übertragen wird, und wobei der Planetenradsatz (11) im Generatorbetrieb bei einem geöffneten Schaltelement (14) und bei wenigstens einem geschlossenen, zu der Antriebswelle (6) führenden Schaltelement (15) in geblocktem Zustand umläuft.

11. Antriebssystem nach Anspruch 7 oder 9, **dadurch gekennzeichnet, daß** das erste Hohlrad (18) als ein großes Hohlrad und das zweite Hohlrad (27) als ein kleines Hohlrad ausgebildet ist.

12. Antriebssystem nach Anspruch 8 oder 10, **dadurch gekennzeichnet, daß** das erste Sonnenrad (16) als ein kleines Sonnenrad und das zweite Sonnenrad (28) als ein großes Sonnenrad ausgebildet ist.

13. Antriebssystem nach einem der Ansprüche 5 bis 12, **dadurch gekennzeichnet, daß** als das wenigstens eine Schaltelement zur Blockierung des Planetenradsatzes (11) im Generatorbetrieb eine zu der Antriebswelle (6) führende Freilaufkupplung (15) vorgesehen ist.

14. Antriebssystem nach einem der Ansprüche 5 bis 12, **dadurch gekennzeichnet, daß** als das wenigstens eine Schaltelement zur Blockierung des Planetenradsatzes (11) im Generatorbetrieb eine zu der Antriebswelle (6) führende momentbetätigte Kupplung (15') vorgesehen ist.

15. Antriebssystem nach einem der Ansprüche 5 bis 12, **dadurch gekennzeichnet, daß** als das wenigstens eine Schaltelement zur Blockierung des Planetenradsatzes (11) im Generatorbetrieb eine zu der Antriebswelle (6) führende ansteuerbare Kupplung (15'') vorgesehen ist.

16. Antriebssystem nach Anspruch 15, **dadurch gekennzeichnet, daß** die ansteuerbare Kupplung (15'') mit einem Hauptdruck des Fahrzeuggetriebes (2) beaufschlagbar ist.

17. Antriebssystem nach einem der Ansprüche 5 bis 12, **dadurch gekennzeichnet, daß** als das wenigstens eine Schaltelement zur Blockierung des Planetenradsatzes (11) im Generatorbetrieb eine zu der Antriebswelle (6) führende Klauenkupplung (15''') vorgesehen ist.

18. Antriebssystem nach wenigstens einem der vorhergehenden Ansprüche, **dadurch gekennzeichnet, daß** das Planetengetriebe (10) mit einer Ölpumpe (24) verbunden ist, welche in einem Fahrbetrieb mit dem Planetengetriebe (10) antreibbar ist.

19. Antriebssystem nach Anspruch 18, **dadurch gekennzeichnet, daß** die Ölpumpe (24) mit dem Planetenradsatz (11) und über eine Kupplung (36) mit der Antriebswelle (6) derart verbunden ist, daß die Ölpumpe (24) unterhalb einer definierten Drehzahl der Antriebswelle (6) bei geschlossener Kupplung (36) mit der Drehzahl der Antriebswelle (6) und oberhalb der definierten Drehzahl der Antriebswelle (6) bei geöffneter Kupplung (36) mit der Drehzahl des Planetenträgers (19) angetrieben wird.

## Claims

1. Drive system for a motor vehicle, with a starter-generator unit (1) being arranged with a drive shaft (6) in a drive train and featuring an electric machine (8, 9), which can be operated as an electric motor with starter function or as an electric generator, and a planetary transmission (10) with at least one sun gear (16, 28), at least one planetary gear (17,17') and at least one internal gear (18, 27), with the planetary transmission (10) being connectable via shafts (12,13,31) and control elements (14, 15, 15', 15", 15"', 29, 30, 32, 34, 36 through 41) with the electric machine (8, 9), with the drive shaft (6) and with a housing (3, 4) of a drive train-positioned unit (2) in such a way that during starting operation a ratio i above 1 and during generator operation a ratio i equaling 1can be set, and with the starter-generator unit (1) - arranged in an area of the housing (3, 4) being penetrated by the drive shaft (6) or by a shaft (5) nonrotationally connected to it - being sealed against the environment surrounding the housing (3, 4), **characterized in that** the unit in which the starter-generator unit (1) is arranged constitutes a vehicle transmission (2) and its housing is a transmission housing (3) closed by a transmission cover (4), with the starter-generator unit (1) and the transmission cover (4), through which the drive shaft (6) or a shaft (5) nonrotationally connected to it enters, being sealed against one engine side.

2. Drive system according to claim 1, **characterized in that** the vehicle transmission (2) features a hydrodynamic torque converter (20), for the accommodation of which the transmission housing (3) features a converter housing (23), with the starter-generator unit (1) being arranged in the converter housing (23) on a side of the torque converter (20) not facing the vehicle transmission (2).

3. Drive system according to claim 1, **characterized in that** the vehicle transmission (2) features a hydrodynamic torque converter (20), for the accommodation of which the transmission housing (3) features a converter housing (23), with the starter-generator unit (1) being arranged on a side of the torque converter (20) facing the vehicle transmission (2), between the torque converter and an oil pump (24) of the vehicle transmission (2).

4. Drive system according to claim 3, **characterized in that** the drive shaft (6) is nonrotationally linked to a crankshaft (5) via a pump shell (22) of the torque converter (20).

5. Drive system for a motor vehicle with a starter-generator unit (1) arranged in a drive train according to one of the preceding claims, which features an electric machine (8, 9) and a planetary transmission (10) with a planetary gear set (11) comprising at least one planet gear (17'), **characterized in that** at least one planet gear (17') is designed as a stepped planet gear with a small stepped planet gear (25) and a large stepped planet gear (26).

6. Drive system according to claims 1 and 5, **characterized in that** the planetary gear set (11) features at least one stepped planet (17'), one sun gear (16) and one internal gear (18), with the internal gear (18) being fixed during starting operation and the torque of the electric machine (8, 9) being transmitted via the sun gear (16) and a planet carrier (19) to the drive shaft (6) or a shaft (5) non-rotationally fixed to it; and with the blocked planetary gear set (11) rotating during generator operation between the internal gear (18) and the housing (3) if one control element (14) is open, while it rotates between the sun gear (16) and the drive shaft (6) if at least one control element (15) is closed.

7. Drive system according to claims 1 and 5, **characterized in that** the planetary gear set (11) features at least one stepped planet gear (17'), one sun gear (16), and two internal gears (18, 27), with a first internal gear (18) -connectable to the housing (3) via a control element (14) - being fixed during starting operation and the torque of the electric machine (8, 9) being transmitted to the drive shaft (6) via the sun gear (16) and a second internal gear (27); and with the blocked planetary gear set (11) rotating during generator operation if one control element is open (14) and if at least one control element (15) leading to the drive shaft (6) is closed.

8. Drive system according to claims 1 and 5, **characterized in that** the planetary gear set (11) features at least one stepped planet (17'), one internal gear (18) and two sun gears (16, 28), with a first sun gear (16) being fixed during starting operation and the torque of the electric machine (8, 9) being transmitted to the drive shaft (6) via the internal gear (18) and the second sun gear (28); and with the blocked planetary gear set (11) rotating during generator operation if one control element (14) is open and if at least one control element (15) leading to the drive shaft (6) is closed.

9. Drive system according to claims 1 and 5, **characterized in that** the planetary gear set (11) features at least one stepped planet (17') and two internal gears (18, 27), with a first internal gear (18) being fixed during starting operation and the torque of the electric machine (8, 9) being introduced via the planet carrier (19) and transmitted to the drive shaft (6) via the second internal gear (27); and with the blocked planetary gear set (11) rotating during generator operation if one control element (14) is open and if at least one control element (15) leading to the drive shaft (6) is closed.

10. Drive system according to claims 1 and 5, **characterized in that** the planetary gear set (11) comprises at least one stepped planet (17') and two sun gears (16, 28), with a first sun gear (16) being fixed during starting operation and the torque of the electric machine (8, 9) being introduced via the planet carrier (19) and transmitted to the drive shaft (6) via the second sun gear (28); and with the blocked planetary gear set (11) rotating during generator operation if one control element (14) is open and if at least one control element (15) leading to the drive shaft (6) is closed.

11. Drive system according to claim 7 or 9, **characterized in that** the first internal gear (18) is designed as a large internal gear and the second internal gear (27) is designed as a small internal gear.

12. Drive system according to claim 8 or 10, **characterized in that** the first sun gear (16) is designed as a small sun gear and the second sun gear (28) is designed as a large sun gear.

13. Drive system according to one of the claims 5 through 12, **characterized in that** at least one control element for blocking the planetary gear set (11) during generator operation is designed as an overrunning clutch (15) leading to the drive shaft (6).

14. Drive system according to one of the claims 5 through 12, **characterized in that** at least one control element for blocking the planetary gear set (11) during generator operation is designed as a torque-controlled clutch (15') leading to the drive shaft (6).

15. Drive system according to one of the claims 5 through 12, **characterized in that** at least one control element for blocking the planetary gear set (11) during generator operation is designed as a controllable clutch (15") leading to the drive shaft (6).

16. Drive system according to claim 15, **characterized in that** the controllable clutch (15") is controllable by the main pressure of the vehicle transmission (2).

17. Drive system according to one of the claims 5 through 12, **characterized in that** at least one control element for blocking the planetary gear set (11) during generator operation is designed as a dog clutch (15''') leading to the drive shaft (6).

18. Drive system according to at least one of the preceding claims, **characterized in that** the planetary transmission (10) is linked to an oil pump (24) driven by the planetary transmission (10) during driving.

19. Drive system according to claim 18, **characterized in that** the oil pump (24) is linked to the planetary gear set (11) and - via a clutch (36) - to the drive shaft in such a way that below a defined speed of the drive shaft (6) - with the clutch (36) closed - the oil pump (24) is driven at the speed of the drive shaft (6), and that above the defined speed of the drive shaft (6) - with the clutch (36) open - the oil pump (24) is driven at the speed of the planet carrier (19).

## Revendications

1. Système de transmission d'un véhicule automobile doté d'une unité alterno-démarreur (1) disposée dans une chaîne cinématique avec un arbre d'entrée (6), ladite unité alterno-démarreur (1) comportant une machine électrique (8, 9) utilisable comme moteur électrique avec fonction de démarreur ou alternateur électrique et une boîte planétaire (10) avec au moins une roue solaire (16, 28), au moins un satellite (17,17') et au moins une couronne (18, 27), sachant que la boîte planétaire (10) peut être liée à l'aide des arbres (12, 13,31) et des éléments de commande (14, 15, 15', 15", 15"', 29, 30, 32, 34, 36 à 41) à la machine électrique (8, 9), à l'arbre d'entrée (6) et au carter (3, 4) d'un organe (2) disposé dans la chaîne cinématique de manière à ce que en mode démarreur puisse être réglé un rapport de transmission i > 1 et en mode alternateur un rapport de transmission i = 1, et sachant que l'unité alterno-démarreur (1) dans le carter (3, 4) est disposée dans une zone, dans laquelle l'arbre d'entrée (6) ou un arbre (5) solidaire en rotation avec celui-ci, passe à travers le carter (3, 4), de manière à être étanche par rapport à une zone environnant le carter (3, 4), **caractérisé en ce que** l'organe dans lequel est disposée l'unité alterno-démarreur (1), une boîte de vitesses d'un véhicule automobile (2) et son carter représentent un carter de boîte de vitesses (3) fermé par un couvercle (4), sachant que l'unité alterno-démarreur (1) est fermé de manière étanche vers un côté moteur avec le couvercle (4) à travers lequel passe l'arbre d'entrée (6) ou un arbre (5) solidaire en rotation avec celui-ci.

2. Système de transmission selon la revendication 1, **caractérisé en ce que** la boîte de vitesses d'un véhicule automobile (2) comporte un convertisseur de couple hydrodynamique (20) pour le logement duquel le carter de la boîte de vitesses (3) est réalisé avec une cloche de convertisseur (23), sachant que l'unité alterno-démarreur (1) est disposée dans la cloche de convertisseur (23) d'un côté du convertisseur de couple (20) opposé à la boîte de vitesses d'un véhicule automobile (2).

3. Système de transmission selon la revendication 1, **caractérisé en ce que** la boîte de vitesses d'un véhicule automobile (2) comporte un convertisseur de couple hydrodynamique (20) pour le logement duquel le carter de la boîte de vitesses (3) est réalisé avec une cloche de convertisseur (23), sachant que l'unité alterno-démarreur (1) est disposée d'un côté du convertisseur de couple (20) tourné vers la boîte de vitesses d'un véhicule automobile (2) entre celui-ci et une pompe à huile (24) de la boîte de vitesses d'un véhicule automobile (2).

4. Système de transmission selon la revendication 3, **caractérisé en ce que** l'arbre d'entrée (6) est monté solidaire en rotation avec un vilebrequin (5) par l'intermédiaire d'un couvercle de pompe (22) du convertisseur de couple (20).

5. Système de transmission d'un véhicule automobile doté d'une unité alterno-démarreur (1) disposée dans une chaîne cinématique selon une des revendications précédentes comportant une machine électrique (8, 9) et une boîte planétaire (10) avec un train épicycloïdal (11) comportant au moins un satellite (17'), **caractérisé en ce que** l'au moins un satellite (17') est réalisé en tant que satellite étagé avec un petit satellite étagé (25) et un grand satellite étagé (26).

6. Système de transmission selon les revendications 1 et 5, **caractérisé en ce que** le train épicycloïdal (11) comporte au moins un satellite étagé (17'), une roue solaire (16) et une couronne (18), sachant qu'en mode démarreur la couronne (18) est bloquée et le couple de la machine électrique (8, 9) est mené à travers la roue solaire (16) et un arbre porte-satellites (19) à l'arbre d'entrée (6) ou à un arbre (5) solidaire en rotation avec celui-ci, et sachant qu'en mode alternateur le train épicycloïdal (11), lorsqu'un élément de commande (14) entre la couronne (18) et le carter (3) est ouvert et au moins un élément de commande (15) entre la roue solaire (16) et l'arbre d'entrée (6) est fermé, l'arbre porte-satellites (19) tourne dans l'état bloqué.

7. Système de transmission selon les revendications 1 et 5, **caractérisé en ce que** le train épicycloïdal (11) comporte au moins un satellite étagé (17'), une roue solaire (16) et deux couronnes (18, 27), sachant qu'en mode démarreur est bloquée une première couronne (18) qui peut être liée par l'intermédiaire d'un élément de commande (14) avec le carter (3) et que le couple de la machine électrique (8, 9) est transmis par la roue solaire (16) et une deuxième couronne (27) à l'arbre d'entrée (6), et sachant qu'en mode alternateur, et lorsqu'un élément de commande (14) et ouvert et au moins un élément de commande (14) menant à l'arbre d'entrée (6) est fermé, le train épicycloïdal (11) tourne en état bloqué.

8. Système de transmission selon les revendications 1 et 5, **caractérisé en ce que** le train épicycloïdal (11) comporte au moins un satellite étagé (17'), une roue solaire (18) et deux couronnes (16, 28), sachant qu'en mode démarreur est bloquée une première roue solaire (16) et que le couple de la machine électrique (8, 9) est transmis par la couronne (18) et la deuxième roue solaire (28) à l'arbre d'entrée (6), et sachant qu'en mode alternateur, et lorsqu'un élément de commande (14) et ouvert et au moins un élément de commande (15) menant à l'arbre d'entrée (6) est fermé, le train épicycloïdal (11) tourne en état bloqué.

9. Système de transmission selon les revendications 1 et 5, **caractérisé en ce que** le train épicycloïdal (11) comporte au moins un satellite étagé (17'), et deux couronnes (18, 27), sachant qu'en mode démarreur est bloquée une première couronne (18) et que le couple de la machine électrique (8, 9) est appliqué par l'intermédiaire d'un arbre porte-satellites (19) et transmis par la deuxième couronne (27) à l'arbre d'entrée (6), et sachant qu'en mode alternateur, et lorsqu'un élément de commande (14) et ouvert et au moins un élément de commande (15) menant à l'arbre d'entrée (6) est fermé, le train épicycloïdal (11) tourne en état bloqué.

10. Système de transmission selon les revendications 1 et 5, **caractérisé en ce que** le train épicycloïdal (11) comporte au moins un satellite étagé (17') et deux roues solaires (16, 28), sachant qu'en mode démarreur est bloquée une première roue solaire (16) et que le couple de la machine électrique (8, 9) est appliqué par l'intermédiaire d'un arbre porte-satellites (19) et transmis par la deuxième roue solaire (28) à l'arbre d'entrée (6), et sachant qu'en mode alternateur, et lorsqu'un élément de commande (14) et ouvert et au moins un élément de commande (15) menant à l'arbre d'entrée (6) est fermé, le train épicycloïdal (11) tourne en état bloqué.

11. Système de transmission selon les revendications 7 ou 9, **caractérisé en ce que** la première couronne (18) est réalisée en tant que grande couronne et la deuxième couronne (27) est réalisée en tant que petite couronne.

12. Système de transmission selon les revendications 8 ou 10, **caractérisé en ce que** la première roue solaire (16) est réalisée en tant que petite roue solaire et **en ce que** la deuxième roue solaire (28) est réalisée en tant que grande roue solaire.

13. Système de transmission selon une des revendications 5 à 12, **caractérisé en ce que** l'au moins un élément de commande pour le blocage du train épicycloïdal (11) en mode alternateur est réalisé en tant qu'accouplement à roue libre (15) menant à l'arbre d'entrée (6).

14. Système de transmission selon une des revendications 5 à 12, **caractérisé en ce que** l'au moins un élément de commande pour le blocage du train épicycloïdal (11) en mode alternateur est réalisé en tant qu'embrayage actionné par un couple (15') menant à l'arbre d'entrée (6).

15. Système de transmission selon une des revendications 5 à 12, **caractérisé en ce que** l'au moins un élément de commande pour le blocage du train épicycloïdal (11) en mode alternateur est réalisé en tant qu'embrayage pilotable (15") menant à l'arbre d'entrée (6).

16. Système de transmission selon la revendication 15, **caractérisé en ce que** l'embrayage pilotable (15") peut être pressurisé par une pression principale de la boîte de vitesses d'un véhicule automobile (2).

17. Système de transmission selon une des revendications 5 à 12, **caractérisé en ce que** l'au moins un élément de commande pour le blocage du train épicycloïdal (11) en mode alternateur est réalisé en tant qu'accouplement à crabots (15"') menant à l'arbre d'entrée (6).

18. Système de transmission selon au moins une des revendications précédentes, **caractérisé en ce que** la boîte planétaire (10) est liée à une pompe à huile (24), qui peut être entraînée dans un mode de fonctionnement avec une boîte planétaire (10).

19. Système de transmission selon la revendication 18, **caractérisé en ce que** la pompe à huile (24) est liée au train épicycloïdal (11) et par l'intermédiaire d'un embrayage (36) à l'arbre d'entrée (6) de façon à ce que la pompe à huile (24) est entraînée en dessous du régime défini de l'arbre d'entrée (6), l'embrayage (36) étant fermé, avec le régime de l'arbre d'entrée (6) et en dessus du régime défini de l'arbre d'entrée (6), l'embrayage (36) étant ouvert, avec le régime de l'arbre porte-satellites (19).
